# EUROPEAN PATENT SPECIFICATION

(11) **EP 1 007 273 B1**
(45) Date of publication and mention of the grant of the patent: **27.02.2002**
(21) Application number: 98921635.3
(22) Date of filing: 15.05.1998
(51) Int. Cl.: B23P 19/04, B25B 27/00, B60J 10/00

(54) **STRIP FITTING TOOLS AND METHODS**
VERFAHREN UND WERKZEUG ZUR FIXIERUNG EINES BANDES
OUTILS ET PROCEDES PERMETTANT D'ADAPTER UNE BANDE

(30) Priority: 25.07.1997 GB 9715772
(43) Date of publication of application: 14.06.2000
(73) Proprietor: GenCorp Property Inc., Sacramento, CA 95853-7012 (US)
(72) Inventor: REUVERS, Markus, D-47906 Kempen (DE); TODT, Bernd, D-22143 Hamburg (DE)
(74) Representative: Foster, David Martyn
(86) International application number: GB9801419
(87) International publication number: WO9904927

(56) References cited:
- EP-A- 0 317 086
- DE-A- 4 401 092
- GB-A- 2 215 762
- PATENT ABSTRACTS OF JAPAN vol. 018, no. 177 (M-1582), 25 March 1994 -& JP 05 338567 A (TOYODA GOSEI CO LTD), 21 December 1993

## Description

The invention relates to a tool for fitting a channel-shaped strip into an embracing frictional position on a mount, comprising a tool body, and two main rollers mounted side by side on the body for rotation about parallel axes and for receiving the strip in the gap between them and for exerting a force tending to press the side walls of the channel of the strip towards the mount as the rollers rotate and the tool travels along the strip on the mount.

The invention also relates to a portable tool for fitting a channel-shaped sealing, trimming or finishing strip into an embracing frictional position on a flange or similar mount around an opening on a motor vehicle body, comprising a tool body, two main rollers mounted side-by-side on the body for rotation about parallel axes, motor means for rotating the rollers in opposite directions, the main rollers defining a gap between them and for exerting a force tending to press the side walls of the channel towards the flange or the like as the rollers rotate and the tool moves along the strip on the mount, and a further roller rotatably mounted on the tool body about an axis perpendicular to the parallel axes of the main rollers and positioned in front of the main rollers in the direction of travel of the tool along the strip and for exerting a force on the outside of the base of the channel tending to press the channel onto the mounting flange

The invention further relates to a method of fitting a channel-shaped strip into a frictionally embracing position on a mount, comprising the steps of fitting the channel of the strip embracingly over the mount, and applying sideways-directed forces to the outsides of the side walls of the channel by means of two side by side rollers which contra-rotate about parallel axes and through the gap between which the strip passes in contact with the rollers.

Such tools and method are known, for example, from GB-A-2 215 762. In certain applications where the strips are sealing strips to be fitted to a vehicle body, the sealing strip may have a sideways-extending lip such as, for example, a lip known as a cosmetic lip (for embracing the edge of a trim panel of the vehicle body). However, it is found that such a sideways-extending lip has a tendency to become partially folded between the main rollers and to force the tool off the strip. The invention aims to deal with this problem.

According to the invention, therefore, the tool as first set forth above is characterised by a guiding member mounted on the tool body, the guide member being arranged to contact a sideways extension from the channel of, and forming part of, the strip and to apply a guiding force to the sideways extension which guides it between the rollers.

According to the invention, also, the tool as secondly set forth above is characterised by a guiding member mounted on the tool body in front of the main rollers in the direction of travel of the tool along the strip and for contacting a cosmetic lip on the outside of the channel of the strip and for applying a guiding force to the cosmetic lip which guides it into the gap between the main rollers and opposes any tendency for the cosmetic lip in the gap to lift the tool off the strip on the mounting flange or the like.

According to the invention, the method as first set forth above is characterised by the step of applying a sideways-directed guiding force to an extension running longitudinally along an outside wall of the strip so as to guide the extension into the said gap.

Tools and methods according to the invention, and for use in fitting sealing, trimming or finishing strips to motor vehicle bodies, will now be described, by way of example only, with reference to the accompanying diagrammatic drawings in which:
Figure 1 is a cross-section through a sealing, trimming or finishing strip showing it fitted onto a motor vehicle body, such as around the frame of a door opening;
Figure 2 shows the strip of Figure 1 during an initial stage of the fitting process;
Figure 3 is a side elevation of one of the tools, for use in fitting the seal of Figures 1 and 2 in position;
Figure 4 is a scrap view looking in the direction of the arrow IV of Figure 3;
Figure 5 is a side view corresponding to Figure 3 but showing a modified form of the tool;
Figure 6 is a side view corresponding to Figure 3 but showing another modified form of the tool; and
Figure 7 is a side view of a further modified form of the tool.

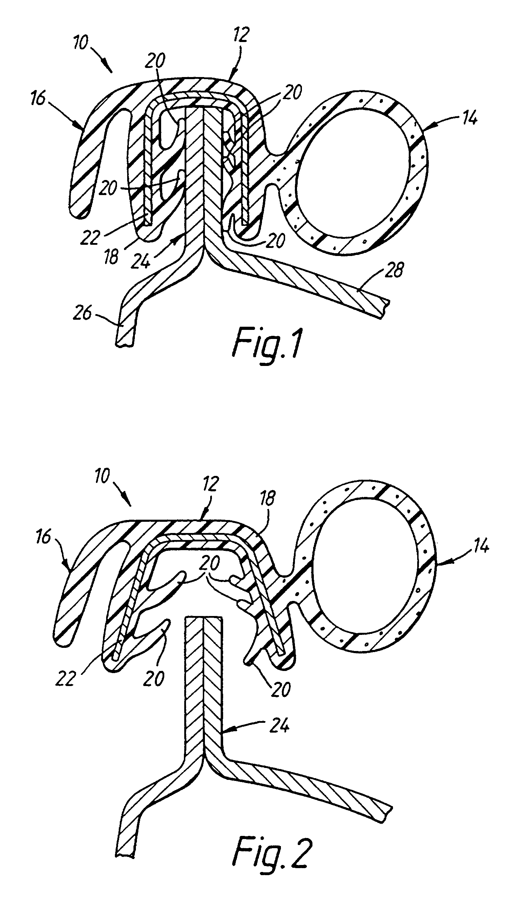

As shown in Figure 1, a sealing, trimming or finishing strip 10 comprises a gripping part 12, a sealing part 14 and a so-called "cosmetic lip" 16. The gripping part 12 is channel-shaped and is advantageously extruded from plastics or rubber or similar material 18. The extruded material 18 has integral inwardly directed gripping lips 20, there being in this example two relatively large lips on one inside wall of the channel and three smaller lips on the opposite side; however, the number and sizes of the lips can be varied. In addition, the gripping part 12 incorporates a channel-shaped reinforcing carrier 22, advantageously made of metal or other resilient material. The carrier may comprise a plurality of U-shaped elements arranged side-by-side to define the channel and connected together by short integral connecting links or entirely disconnected from each other. Instead, wire looped to and fro may be used to form the carrier. Other forms of carrier are possible. Advantageously, the carrier 22 is incorporated into the extruded material 18 using a cross-head extruder.

The gripping part 12 embracingly grips a mounting flange 24, such as forming the frame of a door opening in the motor vehicle body. The flange 24 may be formed where inner and outer body panels 26 and 28 are brought together at the door opening and welded to each other. The gripping part 12 tightly grips the flange 24, the lips 20 frictionally contacting the opposite faces of the flange. For this purpose, the material of the lips is advantageously softer than the remainder of the extruded material of the gripping part to provide an increased coefficient of friction.

The sealing part 14 is mounted on one outside wall of the channel of the gripping part 12 and, in this example, is of hollow tubular form. It is advantageously extruded from plastics or rubber or similar material but is softer than the extruded material 18 of the gripping part 12. For example, the sealing part 14 may be extruded from cellular material. It may be co-extruded with the material 18 or formed separately and adhesively or otherwise secured to the gripping part 12. When the gripping part 12 is mounted on the flange 24 in the manner shown, the sealing part 14 runs around the frame of the door opening facing outwardly of the vehicle so as to be partially compressed by the closing door thus forming a weatherproof seal.

The cosmetic lip 16 is advantageously co-extruded with the material 18. When the gripping part 12 is mounted in position on the flange 24, the cosmetic lip is positioned on the inside of the vehicle, running around the frame of the opening, and is used to cover, and partially secure, the edge of the vehicle trim on the inside of the vehicle and adjacent to the door opening.

Figure 2 shows the manner in which the sealing strip 10 is mounted on the flange 24. As shown, the gripping part 12 is supplied to the vehicle manufacturer with the side walls of the channel splayed outwardly relative to each other. In this way, the fitter on the assembly line can easily position the gripping part on the flange 24 because the channel mouth is much wider than the width of the flange. Thereafter, using the tool to be described in more detail below, the splayed-apart side walls of the gripping part are pressed towards each other so as to force them, and the lips 20, into tight frictional gripping contact with the flanges - and thus into the configuration shown in Figure 1.

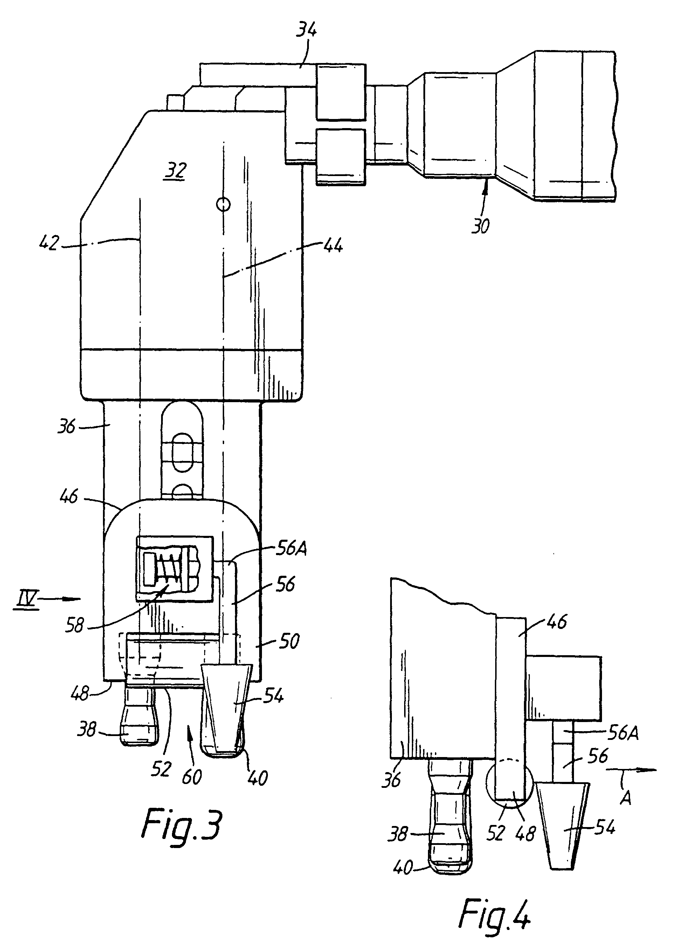

Referring to Figures 3 and 4, the tool shown there comprises a motor 30 such as an air motor driven by compressed air. The motor 30 is connected to a gearbox 32 by a mounting bracket 34. The gearbox 32 supports an output unit 36 from which rotatably extend two main rollers 38 and 40. The rollers 38 and 40 are arranged to be rotatable around respective axes shown dotted at 42 and 44. Via the gearbox 32, the output shaft (not shown) of the air motor 30 drives the rollers 38 and 40 to rotate in opposite directions about these axes.

The output unit 36 also carries a roller support 46 which has two oppositely facing jaws 48 and 50 between which is rotatably mounted a third "or top" roller 52 which is undriven.

Mounted on the output unit 36 is a guidance roller 54 which is rotatably mounted on an arm 56 and extends downwardly, generally parallel to the rollers 38 and 40 although, its axis is not coplanar with their axes. As shown in Figure 4, the roller 54 is positioned ahead of the rollers 38,40 and 52 in the direction of the arrow A. The arm 56 has a right angle bend and the arm part 56A is mounted on the roller support 46 by means of a mount 57. As shown in scrap view at B in Figure 3, the arm part 56A may be mounted by means of a spring-loaded arrangement 58 which urges the arm 56 and the roller 54 bodily to the left (as viewed in Figure 3). The surface of the roller 54 is inclined to its rotational axis.

In use, the strip 10, in the configuration shown in Figure 2, is placed over the mounting flange 24. The tool is then placed over the strip 10 on the flange so that the gripping part 12 (with its splayed-apart side walls), the sealing part 14 and the cosmetic lip 16 are all positioned in the space 60 between the side rollers 38,40 (it will be appreciated that the strip 10 shown in Figures 1 and 2 is illustrated to a larger scale than the scale of the tool in Figure 3). The inclined surface of the guiding roller 54 makes contact with the outside of the cosmetic lip 16 at a point ahead of the part of the cosmetic lip (and the remainder of the strip) which is positioned in the gap 60. The top roller 52 makes contact with the (inverted) base of the gripping part 12.

The air motor 30 is then energised which will cause contrarotation of the rollers 38,40, thus carrying the tool along the strip 10 on the flange 24 in the direction of the arrow A (Figure 4), the tool being guided during its travel by the fitter. As the tool moves in this way along the strip on the flange, the rollers 38,40 have the effect of forcing the splayed-apart side walls of the gripping part 12 towards the flange 24 so that the lips 20 make tight frictional contact with the flange. During this process, the metal carrier 22 is similarly re-configured and ensures that, as the tool passes each particular point along the length of the strip 10, the gripping part 12 maintains its new configuration which corresponds to that shown in Figure 1 and in which the strip is held securely on the flange.

During this mounting process, the guide roller 54 guides the cosmetic lip 16 into the gap 60 and ensures that the cosmetic lip 16 is held in its correct position as each successive part of its length comes between the rollers 38,40. Cosmetic lips may be made of relatively bulky material and it is found that there is a tendency for the cosmetic lip 16 to rise upwardly relative to the gripping part 12 (as viewed in Figures 1 and 2) as the tool moves along the sealing strip. This tendency can become sufficient to force the tool completely off the sealing strip 10. This tendency is prevented or minimised by the guiding roller 54 which tends to press the cosmetic lip downwardly as each part of it comes between the two rollers 38 and 40, this process being assisted by the inclined surface of the roller.

Although Figure 3 illustrates the guiding roller 54 as being undriven, and thus freely rotating by its frictional contact with the outside of the cosmetic lip 16 as the tool moves along the strip, the roller 54 could instead be driven by the air motor so as to assist the process of driving the tool along the strip.

The guiding roller 54 needs to be positioned in front of the side rollers 38,40 (in the direction of travel of the tool) but may be behind or in alignment with the top roller 52 instead of being in front of the top roller.

The top roller 52 is preferably undriven but may instead be driven.

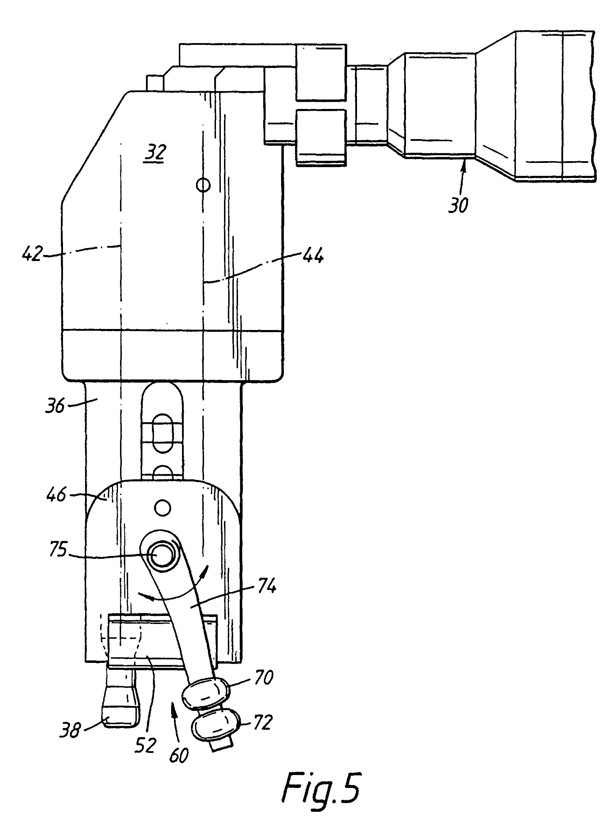

In Figure 5, items corresponding to those in Figures 3 and 4 are similarly referenced.

In the tool of Figure 5, the guiding roller 54 is replaced by two guiding balls 70,72 which are rotatably mounted on a swing arm 74 pivotted at 75 on the roller support 46. At the pivot point 75, a spiral spring may be provided which tends to drive the arm 74 in a clockwise direction (as viewed in the Figure). The operation of the tool of Figure 5 is generally the same as described with reference to Figures 3 and 4. The balls 70,72 make contact with the outside of the cosmetic lip 16 as the tool moves along the strip 10 on the flange, the balls 70,72 guiding the cosmetic lip into the gap between the rollers 38 and 40 and preventing the cosmetic lip 16 from tending to rise upwardly between the rollers 38 and 40.

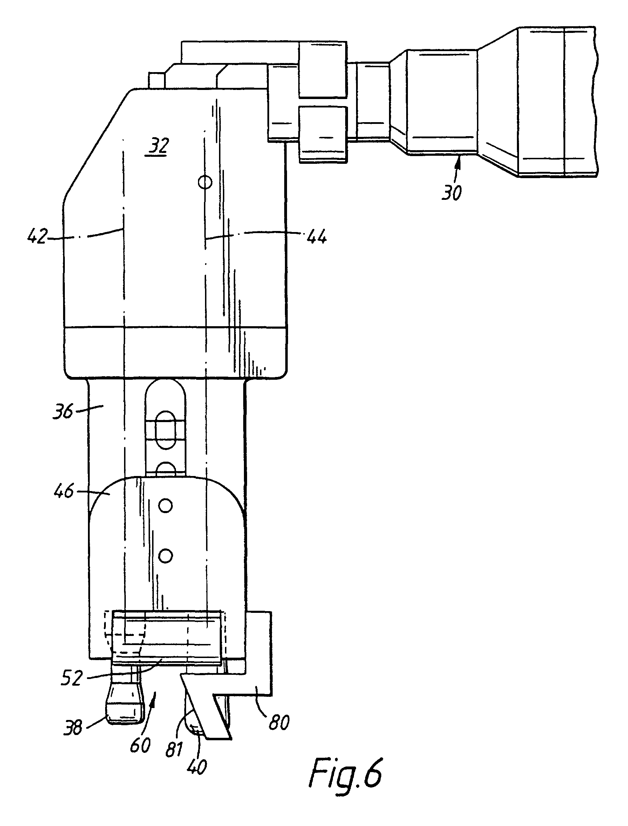

In the tool of Figure 6, in which, again, parts corresponding to parts in the other Figures are similarly referenced, the guiding roller 54 and the guiding balls 70,72 of the previous Figures are replaced by a fixed guide arm 80 which is suitably mounted on the outside of the roller support 46. The arm 80 has an inclined surface 81 which, again, exerts an inwardly and downwardly directed force on the outside of the cosmetic lip 16 to guide it between the side rollers 38,40 and to prevent it rising upwardly between them. Instead of being completely fixed, the guiding arm 80 may be sprung-mounted so as to exert a force to the left as viewed in the Figure.

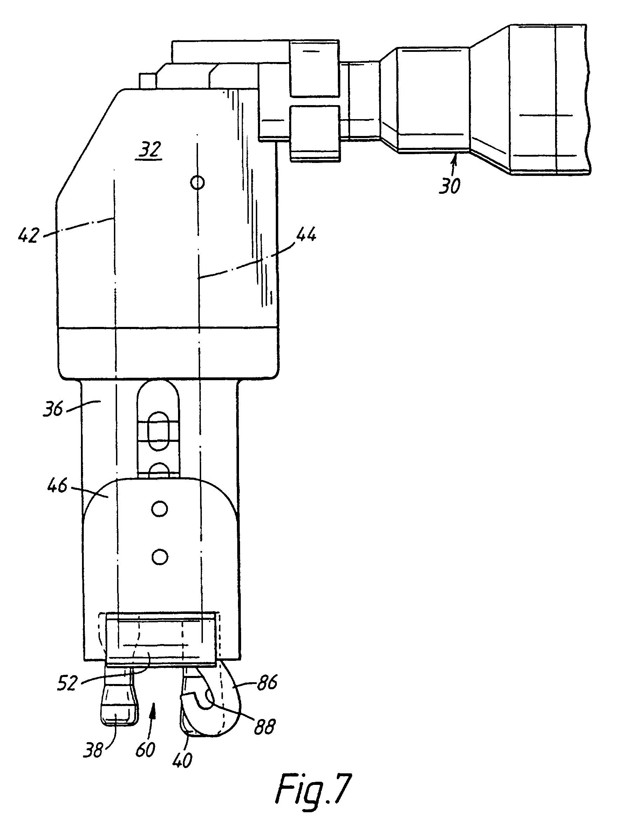

In the tool of Figure 7, the guiding member 86 is, like the guiding member 80 of Figure 6, non-rotary but in this case has an inner profile 88 which is shaped to match the shape of the cosmetic lip 16 (Figure 1). The cosmetic lip is thus fitted within the inner profile 88 and held there as the tool moves along the sealing strip, the guiding member 86 again guiding the cosmetic lip into a gap between the rollers 38 and 40 and holding the cosmetic lip in the correct attitude.

It will be appreciated that the tools illustrated may also be used for fitting strips in which the sealing part 14 is mounted on the outside of the (inverted) base of the gripping part 12 instead of one outside side wall. In such a case, the top roller 52 will make contact with the sealing part. The tools shown may also be used to fit strips in which there is no sealing part 14 but only the cosmetic lip 16. Instead, however, the tools illustrated may be used in a modified form in which the guiding roller 54, the guiding balls 72,74 or the guiding members 80,86 act on the sealing part instead of on the cosmetic lip.

In a further modification, the tool may carry a guiding roller 54 (or the guiding balls 72,74 or the guiding member 80,86) on both sides of the tool instead of only on one side. Such tools will therefore guide cosmetic lips or sealing parts, or other sideways extensions, on both sides of the strip.

## Claims

1. A tool for fitting a channel-shaped strip (10) into an embracing frictional position on a mount (24), comprising a tool body (30,32,36), and two main rollers (38,40) mounted side by side on the body (30,32,36) for rotation about parallel axes and for receiving the strip (10) in the gap between them and for exerting a force tending to press the side walls of the channel of the strip (10) towards the mount (24) as the rollers (38,40) rotate and the tool travels along the strip (10) on the mount (24), **characterised by** a guiding member (54,70,72,80,81,86) mounted on the tool body (30,32,36), the guiding member (54,70,72,80,81,86) being arranged to contact a sideways extension (16) from the channel of, and forming part of, the strip (10) and to apply a guiding force to the sideways extension (16) which guides it between the rollers (38,40).

2. A tool according to claim 1, **characterised in that** the guiding member (54,70,72,80,81,86) is mounted so as to make contact with each point on the sideways extension (16) of the strip (10) before the main rollers (38,40) pass that point as the tool travels along the strip (10).

3. A tool according to claim 1 or 2, **characterised in that** the guiding force is exerted in an inclined direction directed towards the mouth of the channel of the strip (10).

4. A tool according to any preceding claim, **characterised in that** the guiding member comprises a rotatable member (54,70,72).

5. A tool according to claim 4, **characterised in that** the rotatable guiding member is a rotatable roller (54).

6. A tool according to claim 3, **characterised in that** the guiding member is a rotatable roller (54) which is rotatable about an axis generally parallel to the parallel axes of the main rollers (38,40) and has a peripheral surface which is inclined to its rotational axis to produce the inclined guiding force.

7. A tool according to claim 5 or 6, **characterised in that** the roller (54) of the guiding member is rotatably mounted on a support (56) which is movable relative to the tool body (30,32,36) and resiliently biassed so as to press the roller (54) of the guiding member into contact with the sideways extension (16) of the strip (10).

8. A tool according to claim 4, **characterised in that** the guiding member comprises at least one rotatable ball (70,72) mounted on an arm (74) carried by the tool body (30,32,36).

9. A tool according to claim 8, **characterised in that** the arm (74) is pivotally mounted on the tool body (30,32,36) and is resiliently biassed so as to press the ball (70,72) into contact with the sideways extension (16) of the strip (10).

10. A tool according to any one of claims 1 to 3, **characterised in that** the guiding member is a non-rotatable member (80,86) for slidably contacting the sideways extension (16) of the strip (10).

11. A tool according to claim 10, **characterised in that** the non-rotatable member (80,86) is movably mounted on the tool body (30,32,36) and resiliently biassed into contact with the sideways extension (16) of the strip (10).

12. A tool according to claim 10 or 11, **characterised in that** the guiding member (86) is pre-formed with a surface (88) which contacts the sideways extension (16) of the strip and which matches the shape of the sideways extension (16).

13. A tool according to any one of claims 1 to 3, **characterised in that** the guiding member (54,70,72) is movable relative to the tool body (30,32,36) and resiliently biassed into contact with the sideways extension of the strip.

14. A tool according to any preceding claim, **characterised by** a further roller (52) mounted on the tool body (30,32,36) for rotation about an axis perpendicular to the parallel axes of the main rollers (38,40) for making rotational contact with the strip (10) as the tool moves along the strip (10) on the mount (24) and exerting a force on the outside of the base of the channel.

15. A tool according to any preceding claim, **characterised by** motor means mounted on the tool body (30) for rotatably driving the main rollers (38,40) in opposite rotary directions.

16. A portable tool for fitting a channel-shaped sealing, trimming or finishing strip (10) into an embracing frictional position on a flange (24) or similar mount around an opening on a motor vehicle body, comprising a tool body (30,32,36), two main rollers (38,40) mounted side-by-side on the body (30,32,36) for rotation about parallel axes, motor means (32) for rotating the rollers (38,40) in opposite directions, the main rollers (38,40) defining a gap between them and for exerting a force tending to press the side walls of the channel towards the flange (24) or the like as the rollers (38,40) rotate and the tool moves along the strip (10) on the mount (24), and a further roller (52) rotatably mounted on the tool body (30,32,36) about an axis perpendicular to the parallel axes of the main rollers (38,40) and positioned in front of the main rollers (38,40) in the direction of travel of the tool along the strip (10) and for exerting a force on the outside of the base of the channel tending to press the channel onto the mounting flange (24) or the like, **characterised by** a guiding member (54,70,72,80,86) mounted on the tool body (30,32,36) in front of the main rollers (38,40) in the direction of travel of the tool along the strip and for contacting a cosmetic lip (16) on the outside of the channel of the strip (10) and for applying a guiding force to the cosmetic lip (16) which guides it into the gap between the main rollers (38,40) and opposes any tendency for the cosmetic lip (16) in the gap to lift the tool off the strip (10) on the mounting flange (24) or the like.

17. A tool according to claim 16, **characterised in that** the guiding force is exerted in an inclined direction directed towards the mouth of the channel of the strip (10).

18. A tool according to claim 16 or 17, **characterised in that** the guiding member (54,70,72,80,86) is movable relative to the tool body (30,32,36) and resiliently biassed into contact with the cosmetic lip (16).

19. A tool according to any one of claims 16 to 18, **characterised in that** the guiding member compries a rotatable member (54,70,72).

20. A tool according to any one of claims 16 to 18, **characterised in that** the guiding member is a non-rotatable member (80,86) for slidably contacting the cosmetic lip (16).

21. A method of fitting a channel-shaped strip (10) into a frictionally embracing position on a mount (24), comprising the steps of fitting the channel of the strip (10) embracingly over the mount (24), and applying sideways-directed forces to the outsides of the side walls of the channel by means of two side by side rollers (38,40) which contra-rotate about parallel axes and through the gap between which the strip (10) passes in contact with the rollers (38,40), **characterised by** the step of applying a sideways-directed guiding force to an extension (16) running longitudinally along an outside wall of the strip, so as to guide the extension (16) into the said gap.

22. A method according to claim 21, **characterised in that** the contra-rotating rollers (38,40) are part of a portable tool which travels along the strip on the mount (24) as the rollers (38,40) contra-rotate.

23. A method according to claim 22, **characterised in that** the sideways-directed guiding force is applied to the extension at a point ahead of the contra-rotating rollers (38,40) in the direction of travel of the tool.

24. A method according to any one of claims 21 to 23, **characterised in that** the guiding force has a component directed in an inclined direction towards the mouth of the channel.

25. A method according to any one of claims 21 to 24, **characterised in that** the sideways-directed force is applied by a member (54,70,72) rotatable about an axis generally parallel to the axes of the contra-rotating rollers (38,40).

26. A method according to any one of claims 21 to 24, **characterised in that** the sideways-directed force is applied by a non-rotating guide member (80,86).

27. A method according to any one of claims 21 to 24, **characterised in that** the channel-shaped strip (10) is a sealing, trimming or finishing strip for an opening in a motor vehicle body and **in that** the extension is a cosmetic lip (16) of the strip (10).

28. A method according to any one of claims 21 to 27, **characterised in that** the side walls of the channel of the strip (10) are in splayed-apart configuration when the strip (10) is initially fitted over the mount.

## Patentansprüche

1. Werkzeug zum Fixieren einer kanalförmigen Leiste (10) in umklammernder reibschlüssiger Lage auf einem Träger (24), mit einem Werkzeugkörper (30, 32, 36) und zwei Hauptwalzen (38, 40), die Seite-an-Seite auf dem Werkzeugkörper (30, 32, 36) angeordneten sind, um sich um parallele Achsen zu drehen und die Leiste (10) in dem Spalt zwischen sich aufzunehmen und, um eine Kraft auszuüben, die darauf hinstrebt, die Seitenwände des Kanals der Leiste (10) auf den Träger (24) zu zu pressen, wenn die Walzen (38, 40) rotieren und das Werkzeug entlang der Leiste (10) auf dem Träger (24) verfährt,
**gekennzeichnet durch**
ein auf dem Werkzeugkörper (30, 32, 36) angeordnetes Führungsglied (54, 70, 72, 80, 81, 86), wobei das Führungsglied (54, 70, 72, 80, 81, 86) angeordnet ist, um einen Fortsatz (16) seitlich von dem Kanals der Leiste (10) zu kontaktieren, der einen Teil des Kanals der Leiste (10) bildet, und, um eine Führungskraft auf den seitlichen Fortsatz (16) auszuüben, die diesen zwischen die Walzen (38, 40) lenkt.

2. Werkzeug nach Anspruch 1, **dadurch gekennzeichnet, daß** das Führungsglied (54, 70, 72, 80, 81, 86) so angeordnet ist, daß es mit jedem Punkt des seitlichen Fortsatzes (16) der Leiste (10) in Kontakt tritt, bevor die Hauptwalzen (38, 40) diesen Punkt passieren, wenn das Werkzeug entlang der Leiste (10) verfährt.

3. Werkzeug nach Anspruch 1 oder 2, **dadurch gekennzeichnet, daß** die Führungskraft in einer geneigten Richtung auf die Öffnung des Kanals der Leiste (10) gerichtetet ausgeübt wird.

4. Werkzeug nach einem der vorhergehenden Ansprüche, **dadurch gekennzeichnet, daß** das Führungsglied ein drehbares Bauteil (54, 70, 72) umfaßt.

5. Werkzeug nach Anspruch 4, **dadurch gekennzeichnet, daß** das drehbare Führungsglied eine drehbare Walze (54) ist.

6. Werkzeug nach Anspruch 3, **dadurch gekennzeichnet, daß** das Führungsglied eine drehbare Walze (54) ist, die um eine Achse im wesentlichen parallel zu den parallelen Achsen der Hauptwalzen (38, 40) drehbar ist und eine Umfangsoberfläche aufweist, die zu ihrer Rotationsachse geneigt ist, um die geneigte Führungskraft zu erzeugen.

7. Werkzeug nach Anspruch 5 oder 6, **dadurch gekennzeichnet, daß** die Walze (54) des Führungsglieds drehbar auf einem Träger (56) angeordnet ist, der relativ zum Werkzeugkörper (30, 32, 36) bewegbar ist und elastisch vorgespannt ist, um die Walze (54) des Führungsglieds in Kontakt mit dem seitlichen Fortsatz (16) der Leiste (10) zu pressen.

8. Werkzeug nach Anspruch 4, **dadurch gekennzeichnet, daß** das Führungsglied wenigstens eine drehbare Kugel (70, 72) umfaßt, die an einem von dem Werkzeugkörper (30, 32, 36) getragenen Arm (74) angeordnet ist.

9. Werkzeug nach Anspruch 8, **dadurch gekennzeichnet, daß** der Arm (74) verschwenkbar an dem Werkzeugkörper (30, 32, 36) angeordnet ist und elastisch vorgespannt ist, um die Kugel (70, 72) in Kontakt mit dem seitlichen Fortsatz (16) der Leiste (10) zu pressen.

10. Werkzeug nach einem der Ansprüche 1 bis 3, **dadurch gekennzeichnet, daß** das Führungsglied ein nicht drehbares Bauteil (80, 86) zur gleitenden Kontaktierung des seitlichen Fortsatzes (16) der Leiste (10) ist.

11. Werkzeug nach Anspruch 10, **dadurch gekennzeichnet, daß** das nicht drehbare Bauteil (80, 86) bewegbar an dem Werkzeugkörper (30, 32, 36) angeordnet ist und elastisch in Kontakt mit dem seitlichen Fortsatz (16) der Leiste (10) vorgespannt ist.

12. Werkzeug nach Anspruch 10 oder 11, **dadurch gekennzeichnet, daß** das Führungsglied (86) mit einer Oberfläche (88) vorgeformt ist, die den seitlichen Fortsatz (16) der Leiste (10) kontaktiert und an die Form des seitlichen Fortsatzes (16) angepaßt ist.

13. Werkzeug nach einem der Ansprüche 1 bis 3, **dadurch gekennzeichnet, daß** das Führungsglied (54, 70, 72) relativ zum Werkzeugkörper (30, 32, 36) bewegbar ist und elastisch in Kontakt mit dem seitlichen Fortsatz (16) der Leiste (10) vorgespannt ist.

14. Werkzeug nach einem der vorhergehenden Ansprüche, **gekennzeichnet durch** eine weitere Walze (52), die für eine Drehung um eine Achse senkrecht zu den parallelen Achsen der Hauptwalzen (38, 40) an dem Werkzeugkörper (30, 32, 36) angeordnet ist, um für einen drehenden Kontakt mit der Leiste (10) zu sorgen, wenn das Werkzeug entlang der Leiste (10) auf dem Träger (24) verfährt und, um eine Kraft auf die Außenseite der Basis des Kanals auszuüben.

15. Werkzeug nach einem der vorhergehenden Ansprüche, **gekennzeichnet durch** an dem Werkzeugkörper (30) angeordnete Antriebsmittel, um die Hauptwalzen (38, 40) in entgegengesetzte Drehrichtungen drehend anzutreiben.

16. Tragbares Werkzeug zum Fixieren einer kanalförmigen Dicht-, Trimm- oder Verzierungsleiste (10) in umklammernder reibschlüssiger Lage auf einem Flansch (24) oder einem ähnlichen Träger um eine Öffnung einer Kraftfahrzeugkarosserie, mit einem Werkzeugkörper (30, 32, 36), zwei Hauptwalzen (38, 40), die Seite-an-Seite auf dem Werkzeugkörper (30, 32, 36) angeordneten sind, um sich um parallele Achsen zu drehen, Antriebsmitteln (32), um die Walzen (38, 40) in entgegengesetzte Richtungen zu drehen, wobei die Hauptwalzen (38, 40) einen Spalt zwischen sich bilden, um eine Kraft auszuüben, die darauf hinstrebt, die Seitenwände des Kanals der Leiste (10) auf den Flansch (24) oder dergleichen zu zu pressen, wenn die Walzen (38, 40) rotieren und sich das Werkzeug entlang der Leiste (10) auf dem Träger (24) bewegt, sowie mit einer weiteren Walze (52), die drehbar um eine Achse senkrecht zu den parallelen Achsen der Hauptwalzen (38, 40) an dem Werkzeugkörper (30, 32, 36) angeordnet ist und in Verfahrrichtung des Werkzeugs entlang der Leiste (10) vor den Hauptwalzen (38, 40) positioniert ist und, um eine Kraft auf die Außenseite der Basis des Kanals auszuüben, die darauf hinstrebt, den Kanal auf den Befestigungsflansch (24) oder dergleichen zu pressen,
**gekennzeichnet durch**
ein in Verfahrrichtung des Werkzeugs entlang der Leiste (10) vor den Hauptwalzen (38, 40) auf dem Werkzeugkörper (30, 32, 36) angeordnetes Führungsglied (54, 70, 72, 80, 81, 86), um eine kosmetische Lippe (16) des Kanals der Leiste (10) zu kontaktieren und, um eine Führungskraft auf diese kosmetische Lippe (16) auszuüben, die diese in den Spalt zwischen die Hauptwalzen (38, 40) lenkt und jeder Tendenz der kosmetischen Lippe (16), innerhalb des Spalts das Werkzeug von der Leiste (10) auf dem Befestigungsflansch oder dergleichen abzuheben, entgegentritt.

17. Werkzeug nach Anspruch 16, **dadurch gekennzeichnet, daß** die Führungskraft in einer geneigten Richtung auf die Öffnung des Kanals der Leiste (10) gerichtetet ausgeübt wird.

18. Werkzeug nach Anspruch 16 oder 17, **dadurch gekennzeichnet, daß** das Führungsglied (54, 70, 72, 80, 86) relativ zum Werkzeugkörper (30, 32, 36) bewegbar ist und elastisch in Kontakt mit der kosmetischen Lippe (16) vorgespannt ist.

19. Werkzeug nach einem der Ansprüche 16 bis 18, **dadurch gekennzeichnet, daß** das Führungsglied ein drehbares Bauteil (54, 70, 72) umfaßt.

20. Werkzeug nach einem der Ansprüche 16 bis 18, **dadurch gekennzeichnet, daß** das Führungsglied ein nicht drehbares Bauteil (80, 86) zur gleitenden Kontaktierung der kosmetischen Lippe (16) ist.

21. Verfahren zum Fixieren einer kanalförmigen Leiste (10) in umklammernder reibschlüssiger Lage auf einem Träger (24), mit den Verfahrensschritten umklammerndes Fixieren des Kanals der Leiste (10) auf dem Träger (24) und Ausüben seitwärts gerichteter Kräfte auf die Außenseiten der Seitenwände des Kanals mittels zweier Seitenwalzen (38, 40), die sich gegenläufig um parallele Achsen drehen und durch den Spalt zwischen den Walzen (38, 40), den die Leiste (10) in Kontakt mit den Walzen (38, 40) passiert,
**gekennzeichnet durch**
den Verfahrensschritt Ausüben einer seitwärts gerichteten Führungskraft auf einen Fortsatz (16), der in Längsrichtung entlang einer Außenwand der Leiste verläuft, um den Fortsatz (16) in den Spalt zu lenken.

22. Verfahren nach Anspruch 21, **dadurch gekennzeichnet, daß** die gegenläufigen Walzen (38, 40) Teil eines tragbaren Werkzeugs sind, das entlang der Leiste auf dem Träger (24) verfährt, wenn sich die Walzen (38, 49) gegenläufig drehen.

23. Verfahren nach Anspruch 22, **dadurch gekennzeichnet, daß** die seitwärts gerichtete Führungskraft in Verfahrrichtung des Werkzeugs an einem Punkt vor den sich gegenläufig drehenden Walzen (38, 40) auf den Fortsatz ausgeübt wird.

24. Verfahren nach einem der Ansprüche 21 bis 23, **dadurch gekennzeichnet, daß** die Führungskraft eine in einer geneigten Richtung auf die Öffnung des Kanals gerichtete Komponente aufweist.

25. Verfahren nach einem der Ansprüche 21 bis 24, **dadurch gekennzeichnet, daß** die seitwärts gerichtete Kraft durch ein Bauteil (54, 70, 72) ausgeübt wird, das um eine Achse im wesentlichen parallel zu den Achsen der sich gegenläufig drehenden Walzen (38, 40) drehbar ist.

26. Verfahren nach einem der Ansprüche 21 bis 24, **dadurch gekennzeichnet, daß** die seitwärts gerichtete Kraft durch ein nicht drehendes Führungsglied (80, 86) ausgeübt wird.

27. Verfahren nach einem der Ansprüche 21 bis 24, **dadurch gekennzeichnet, daß** die kanalförmige Leiste (10) eine Dicht-, Trimm- oder Verzierungsleiste für eine Öffnung in einer Kraftfahrzeugkarosserie ist und, daß der Fortsatz eine kosmetische Lippe (16) der Leiste (10) ist.

28. Verfahren nach einem der Ansprüche 21 bis 27, **dadurch gekennzeichnet, daß** die Seitenwände des Kanals der Leiste (10) eine auseinandergebogenen Konfiguration aufweisen, wenn die Leiste (10) anfänglich auf den Träger aufgesetzt wird.

## Revendications

1. Outil de montage d'une bande (10) en forme de canal en position d'accrochage par friction sur une monture (24), comprenant un corps d'outil (30, 32, 36) et deux rouleaux principaux (38, 40) montés côte à côte sur le corps (30, 32, 36) afin qu'ils tournent autour d'axes parallèles et qu'ils logent la bande (10) dans l'espace qui les sépare et exercent une force tendant à pousser les parois latérales du canal de la bande (10) vers la monture (24) lorsque les rouleaux (38, 40) tournent et l'outil se déplace le long de la bande (10) sur la monture (24), **caractérisé par** un organe de guidage (54, 70, 72, 80, 81, 86) monté sur le corps d'outil (30, 32, 36), l'organe de guidage (54, 70, 72, 80, 81, 86) étant destiné à être au contact d'un prolongement latéral (16) du canal de la bande (10) faisant partie de celle-ci et à appliquer une force de guidage au prolongement latéral (16) qui le guide entre les rouleaux (38, 40).

2. Outil selon la revendication 1, **caractérisé en ce que** l'organe de guidage (54, 70, 72, 80, 81, 86) est monté afin qu'il soit au contact de chaque point du prolongement latéral (16) de la bande (10) avant que les rouleaux principaux (38, 40) ne passent à ce point lorsque l'outil se déplace le long de la bande (10).

3. Outil selon la revendication 1 ou 2, **caractérisé en ce que** la force de guidage est appliquée en direction inclinée vers l'embouchure du canal de la bande (10).

4. Outil selon l'une quelconque des revendications précédentes, **caractérisé en ce que** l'organe de guidage comporte un organe rotatif (54, 70, 72).

5. Outil selon la revendication 4, **caractérisé en ce que** l'organe rotatif de guidage est un rouleau rotatif (54).

6. Outil selon la revendication 3, **caractérisé en ce que** l'organe de guidage est un rouleau rotatif (54) qui tourne autour d'un axe parallèle de façon générale aux axes parallèles des rouleaux principaux (38, 40) et qui a une surface périphérique inclinée vers son axe de rotation pour la production de la force inclinée de guidage.

7. Outil selon la revendication 5 ou 6, **caractérisé en ce que** le rouleau (54) de l'organe de guidage est monté afin qu'il tourne sur un support (56) qui est mobile par rapport au corps d'outil (30, 32, 36) et qui est rappelé élastiquement afin qu'il repousse le rouleau (54) de l'organe de guidage au contact du prolongement latéral (16) de la bande (10).

8. Outil selon la revendication 4, **caractérisé en ce que** l'organe de guidage comporte au moins une bille rotative (70, 72) montée sur un bras (74) porté par le corps d'outil (30, 32, 36).

9. Outil selon la revendication 8, **caractérisé en ce que** le bras (74) est monté de façon pivotante sur le corps d'outil (30, 32, 36) et est rappelé élastiquement afin qu'il repousse la bille (70, 72) au contact du prolongement latéral (16) de la bande (10).

10. Outil selon l'une quelconque des revendications 1 à 3, **caractérisé en ce que** l'organe de guidage est un organe non rotatif (80, 86) destiné à être en contact glissant avec le prolongement latéral (16) de la bande (10).

11. Outil selon la revendication 10, **caractérisé en ce que** l'organe non rotatif (80, 86) est monté afin qu'il soit mobile sur le corps d'outil (30, 32, 36) et rappelé élastiquement au contact du prolongement latéral (16) de la bande (10).

12. Outil selon la revendication 10 ou 11, **caractérisé en ce que** l'organe de guidage (86) est mis en forme préalablement avec une surface (88) qui est au contact du prolongement latéral (16) de la bande et qui correspond à la configuration du prolongement latéral (16).

13. Outil selon l'une quelconque des revendications 1 à 3, **caractérisé en ce que** l'organe de guidage (54, 70, 72) est mobile par rapport au corps d'outil (30, 32, 36) et est rappelé élastiquement au contact du prolongement latéral de la bande.

14. Outil selon l'une quelconque des revendications précédentes, **caractérisé par** un rouleau supplémentaire (52) monté sur le corps d'outil (30, 32, 36) afin qu'il tourne autour d'un axe perpendiculaire aux axes parallèles des rouleaux principaux (38, 40) pour être en contact rotatif avec la bande (10) lorsque l'outil se déplace le long de la bande (10) sur la monture (24) et appliquant une force à l'extérieur de la base du canal.

15. Outil selon l'une quelconque des revendications précédentes, **caractérisé par** un dispositif à moteur monté sur le corps d'outil (30) et destiné à entraîner en rotation les rouleaux principaux (38, 40) en sens opposée de rotation.

16. Outil portatif destiné au montage d'une bande d'étanchéité, décorative ou de finition en forme de canal (10) en position d'accrochage par friction sur un flasque (24) ou une monture analogue formée autour d'une ouverture d'une carrosserie de véhicule à moteur, comprenant un corps d'outil (30, 32, 36), deux rouleaux principaux (38, 40) montés côte à côte sur le corps (30, 32, 36) afin qu'ils tournent autour d'axes parallèles, un dispositif à moteur (32) destiné à faire tourner les rouleaux (38, 40) en sens opposés, les rouleaux principaux (38, 40) délimitant entre eux un espace et étant destinés à exercer une force qui a tendance à pousser les parois latérales du canal vers le flasque (24) ou analogue lorsque les rouleaux (38, 40) tournent et l'outil se déplace le long de la bande (10) placée sur la monture (24), et un rouleau supplémentaire (52) monté afin qu'il tourne sur le corps d'outil (30, 32, 36) autour d'un axe perpendiculaire aux axes parallèles des rouleaux principaux (38, 40), positionné en avant des rouleaux principaux (38, 40) dans la direction de déplacement de l'outil le long de la bande (10) et destiné à exercer une force à l'extérieur de la base du canal afin qu'il ait tendance à repousser le canal sur le flasque de montage (24) ou analogue, **caractérisé par** un organe de guidage (54, 70, 72, 80, 86) monté sur le corps d'outil (30, 32, 36) en avant des rouleaux principaux (38, 40) dans la direction de déplacement de l'outil le long de la bande et destiné à être au contact d'une lèvre décorative (16) disposée à l'extérieur du canal de la bande (10) et à appliquer une force de guidage à la lèvre décorative (16) qui la guide dans l'espace compris entre les rouleaux principaux (38, 40) et s'oppose à toute tendance de la lèvre décorative (16) placée dans l'espace à écarter la bande (10) de l'outil par soulèvement sur le flasque de montage (24) ou analogue.

17. Outil selon la revendication 16, **caractérisé en ce que** la force de guidage est exercée en direction inclinée vers l'embouchure du canal de la bande (10).

18. Outil selon la revendication 16 ou 17, **caractérisé en ce que** l'organe de guidage (54, 70, 72, 80, 86) est mobile par rapport au corps d'outil (30, 32, 36) et est rappelé élastiquement au contact de la lèvre décorative (16).

19. Outil selon l'une quelconque des revendications 16 à 18, **caractérisé en ce que** l'organe de guidage est un organe rotatif (54, 70, 72).

20. Outil selon l'une quelconque des revendications 16 à 18, **caractérisé en ce que** l'organe de guidage est un organe non rotatif (80, 86) destiné à être en contact glissant avec la lèvre décorative (16).

21. Procédé de montage d'une bande (10) en forme de canal afin qu'elle s'accroche par friction sur une monture (24), comprenant les étapes suivantes : l'ajustement du canal de la bande (10) afin qu'il entoure la monture (24), et l'application de forces dirigées latéralement aux faces extérieures des parois latérales du canal à l'aide de deux rouleaux placée côte à côte (38, 40) qui tournent en sens opposés autour d'axes parallèles, la bande (10) passant au contact des rouleaux (38, 40) dans l'espace formé entre eux, **caractérisé par** l'étape d'application d'une force de guidage dirigée latéralement à un prolongement (16) qui est disposé longitudinalement le long d'une paroi externe de la bande, afin que le prolongement (16) soit guidé dans ledit espace.

22. Procédé selon la revendication 21, **caractérisé en ce que** les rouleaux (38, 40) qui tournent en sens opposés font partie d'un outil portatif qui se déplace le long de la bande placée sur la monture (24) lorsque les rouleaux (38, 40) tournent en sens inverses.

23. Procédé selon la revendication 22, **caractérisé en ce que** la force de guidage dirigée latéralement est appliquée au prolongement en un point qui est en amont des rouleaux tournant en sens inverses (38, 40) dans la direction de déplacement de l'outil.

24. Procédé selon l'une quelconque des revendications 21 à 23, **caractérisé en ce que** la force de guidage a une composante de direction inclinée vers l'embouchure du canal.

25. Procédé selon l'une quelconque des revendications 21 à 24, **caractérisé en ce que** la force dirigée latéralement est appliquée par un organe (54, 70, 72) destiné à tourner autour d'un axe parallèle de façon générale aux axes des rouleaux tournant en sens inverses (38, 40).

26. Procédé selon l'une quelconque des revendications 21 à 24, **caractérisé en ce que** la force dirigée latéralement est appliqués par un organe non rotatif de guidage (80, 86).

27. Procédé selon l'une quelconque des revendications 21 à 24, **caractérisé en ce que** la bande (10) en forme de canal est une bande d'étanchéité, décorative ou de finition destinée à une ouverture de carrosserie de véhicule à moteur, et **en ce que** le prolongement est une lèvre décorative (16) de la bande (10).

28. Procédé selon l'une quelconque des revendications 21 à 27, **caractérisé en ce que** les parois latérales du canal de la bande (10) ont une configuration écartée lorsque la bande (10) est montée initialement sur la monture.
